(19) Europäisches Patentamt
European Patent Office
Office européen des brevets

(11) **EP 3 642 371 B1**

(12) **EUROPÄISCHE PATENTSCHRIFT**

(45) Veröffentlichungstag und Bekanntmachung des Hinweises auf die Patenterteilung:
**25.10.2023  Patentblatt 2023/43**

(21) Anmeldenummer: **18738199.1**

(22) Anmeldetag: **12.06.2018**

(51) Internationale Patentklassifikation (IPC):
*C21D 8/02* (2006.01)   *C23C 2/12* (2006.01)
*C21D 9/46* (2006.01)   *C21D 1/673* (2006.01)
*B32B 15/01* (2006.01)

(52) Gemeinsame Patentklassifikation (CPC):
**C21D 1/673; B32B 15/012; C21D 8/0226;
C21D 8/0236; C21D 8/0278; C21D 8/0284;
C21D 9/46; C22C 21/02; C22C 38/001;
C22C 38/02; C22C 38/04; C22C 38/06;
C22C 38/22; C22C 38/26; C22C 38/28;**    (Forts.)

(86) Internationale Anmeldenummer:
**PCT/EP2018/065498**

(87) Internationale Veröffentlichungsnummer:
**WO 2018/234102 (27.12.2018 Gazette 2018/52)**

(54) **VERFAHREN ZUR HERSTELLUNG EINES MIT EINEM METALLISCHEN, VOR KORROSION SCHÜTZENDEN ÜBERZUG VERSEHENEN STAHLBAUTEILS**

METHOD FOR PRODUCING A STEEL COMPONENT PROVIDED WITH A METALLIC COATING PROTECTING AGAINST CORROSION

PROCÉDÉ DE FABRICATION D'UN COMPOSANT EN ACIER POURVU D'UN REVÊTEMENT MÉTALLIQUE ANTICORROSION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **19.06.2017  DE 102017210201**

(43) Veröffentlichungstag der Anmeldung:
**29.04.2020  Patentblatt 2020/18**

(60) Teilanmeldung:
**23193706.1**

(73) Patentinhaber:
• **ThyssenKrupp Steel Europe AG
47166 Duisburg (DE)**
• **thyssenkrupp AG
45143 Essen (DE)**

(72) Erfinder:
• **ROSENSTOCK, Dirk
45355 Essen (DE)**
• **BANIK, Janko
58762 Altena (DE)**

(74) Vertreter: **Zenz Patentanwälte Partnerschaft mbB
Gutenbergstraße 39
45128 Essen (DE)**

(56) Entgegenhaltungen:
WO-A1-2008/053273    WO-A1-2017/006144
US-A1- 2011 300 407    US-A1- 2016 312 331
US-A1- 2016 362 764

• **WINDMANN M ET AL: "Formation of intermetallic phases in Al-coated hot-stamped 22MnB5 sheets in terms of coating thickness and Si content", SURFACE AND COATINGS TECHNOLOGY, Bd. 246, 11. März 2014 (2014-03-11), Seiten 17-25, XP028839531, ISSN: 0257-8972, DOI: 10.1016/J.SURFCOAT.2014.02.056**

(52) Gemeinsame Patentklassifikation (CPC): (Forts.)
**C22C 38/32; C22C 38/38; C23C 2/12;**
C21D 2211/008

**Beschreibung**

**Technisches Gebiet**

Die vorliegende Erfindung betrifft Verfahren zur Herstellung eines Stahlbauteils umfassend ein Substrat und eine Beschichtung, ein entsprechendes Stahlbauteil und dessen Verwendung im Automobilsektor.

**Technischer Hintergrund**

Um die im modernen Karosseriebau geforderte Kombination aus geringem Gewicht, maximaler Festigkeit und Schutzwirkung zu bieten, werden heutzutage in den Bereichen der Karosserie, die im Fall eines Crashs besonders hohen Belastungen ausgesetzt sein können, Bauteile eingesetzt, die aus hochfesten Stählen warmumgeformt werden. Beim Warmumformen, auch Warmpresshärten genannt, werden Stahlplatinen, die zuvor von kalt- oder warmgewalztem Stahlband abgeteilt werden, auf eine Verformungstemperatur erwärmt, die im Allgemeinen oberhalb der Austenitisierungstemperatur des jeweiligen Stahls liegt, und im erwärmten Zustand in das Werkzeug einer Umformpresse gelegt. Im Zuge der anschließend durchgeführten Umformung erfährt der Blechzuschnitt bzw. das aus ihm geformte Bauteil durch den Kontakt mit dem kühlen Werkzeug eine schnelle Abkühlung. Die Abkühlraten sind dabei so eingestellt, dass sich im Bauteil ein Härtegefüge ergibt.

WO 2015/036151 A1 offenbart ein Verfahren zur Herstellung eines mit einem metallischen, vor Korrosion schützenden Überzug versehenen Stahlbauteils und ein entsprechendes Stahlbauteil. Das Verfahren gemäß diesem Dokument umfasst das Beschichten eines Stahlflachproduktes mit einer Legierung aus Aluminium, Zink, Magnesium und gegebenenfalls Silizium und Eisen, Schneiden einer Platine aus dem Stahlflachprodukt, Erwärmen der Platine und Umformen der Platine, um das gewünschte Stahlbauteil zu erhalten.

DE 699 07 816 T2 offenbart ein Verfahren zur Herstellung eines beschichteten warm- und kaltgewalzten Stahlblechs mit sehr hoher Festigkeit nach thermischer Behandlung. Dazu wird ein Stahlflachprodukt mit einer Beschichtung versehen und thermisch behandelt. Bei der thermischen Behandlung wird das Werkstück auf eine Temperatur von über 750 °C erwärmt.

Verfahren zur Herstellung beschichteter Stahlbleche sind auch aus der WO 2008/053273 A1 bekannt.

Der vorliegenden Erfindung liegt die Aufgabe zu Grunde, ein Verfahren zur Herstellung von Stahlbauteilen umfassend ein Substrat und eine Beschichtung zur Verfügung zu stellen, mit dem entsprechende Stahlbauteile erhalten werden können, die sich durch einen besonders hohen Biegewinkel $\alpha$ gemäß VDA 238-100 und damit auch durch ein verbessertes Crashverhalten bei ihrem Einsatz im Automobilsektor auszeichnen. Des Weiteren soll erfindungsgemäß in beschichteten Stahlflachprodukten eine Interdiffusionsschichtdicke in einem bestimmten optimalen Intervall liegen um dadurch einen optimierten Biegewinkel zu erreichen, um die Eigenschaften der Stahlflachprodukte zu verbessern.

Die Erfindung ist in den beigefügten Ansprüchen definiert.

Gelöst wird diese Aufgabe durch das erfindungsgemäße Verfahren zur Herstellung eines Stahlbauteils umfassend ein Substrat und eine Beschichtung, wobei der Biegewinkel $\alpha$ des Stahlbauteils und die Dicke der Interdiffusionsschicht $t_{IDS}$ an der Grenzschicht zwischen Substrat und Beschichtung gemäß der allgemeinen Formel (1)

$$\alpha = \left(-0{,}52968 \cdot \frac{t_{IDS}}{\mu m} + 62{,}620\right)^{\circ} \qquad (1)$$

miteinander verknüpft sind, umfassend wenigstens die Schritte:

(A) Bereitstellen eines Stahlflachproduktes enthaltend (alle Angaben in Gew.-%):

0,15 bis 0,50 C,
0,50 bis 3,0 Mn,
0,10 bis 0,50 Si,
0,01 bis 1,00 Cr,
0,01 bis 0,05 Al,
bis zu 0,20 Ti,
bis zu 0,10 P,
bis zu 0,1 Nb,
bis zu 0,01 N,
bis zu 0,05 S und
bis zu 0,1 B,
Rest Fe und unvermeidbare Verunreinigungen,

mit einer Beschichtung enthaltend (alle Angaben in Gew.-%):

3 bis 15 Si,
1 bis 3,5 Fe,
bis zu 0,5 Alkali- und/oder Erdalkalimetalle,
Rest Al und unvermeidbare Verunreinigungen,

(B) Behandeln des Stahlflachproduktes bei einer Ofentemperatur $T_1$ (in K) für eine Dauer $t_1$ (in h), so dass $p_1$ gemäß der Gleichung der allgemeinen Formel (2) einen Wert von 0 bis 45 aufweist:

$$p_1 = \frac{T_1}{10\mathrm{K}} \cdot \left(7{,}562 + \log\left(\frac{t_1}{\mathrm{h}}\right)\right) - 746{,}9 \qquad (2),$$

und

(C) Umformen des aufgeheizten Stahlflachproduktes aus Schritt (B) in einem Formwerkzeug unter gleichzeitigem Abkühlen, um das Stahlbauteil zu erhalten.

Des Weiteren werden diese Aufgaben auch gelöst durch ein entsprechendes Stahlbauteil und durch die Verwendung des erfindungsgemäßen Stahlbauteils im Automobilsektor, insbesondere als Stoßstangenträger/- verstärkung, Türverstärkung, B-Säulen-Verstärkung, A-Säulen-Verstärkung, Dachrahmen oder Schweller.
Das erfindungsgemäße Verfahren wird im Folgenden detailliert beschrieben:

Schritt (A) des erfindungsgemäßen Verfahrens umfasst das Bereitstellen eines Stahlflachproduktes enthaltend (alle Angaben in Gew.-%):

0,15 bis 0,50 bevorzugt 0,20 bis 0,30, besonders bevorzugt 0,21 bis 0,25 C,
0,50 bis 3,0, bevorzugt 0,80 bis 2,00, besonders bevorzugt 1,00 bis 1,50 Mn,
0,10 bis 0,50, bevorzugt 0,15 bis 0,40, besonders bevorzugt 0,20 bis 0,30 Si,
0,01 bis 1,00, bevorzugt 0,10 bis 0,5, besonders bevorzugt 0,10 bis 0,40 Cr,
bis zu 0,20, bevorzugt 0,01 bis 0,10, besonders bevorzugt 0,01 bis 0,04 Ti,
0,01 bis 0,05, besonders bevorzugt 0,02 bis 0,05 Al,
bis zu 0,10, bevorzugt 0,00 bis 0,05, besonders bevorzugt 0,00 bis 0,02 P,
bis zu 0,1, bevorzugt 0,001 bis 0,1 Nb,
bis zu 0,01 N,
bis zu 0,05, bevorzugt 0,00 bis 0,005, besonders bevorzugt 0,00 bis 0,003 S und
bis zu 0,1, bevorzugt 0,001 bis 0,05, besonders bevorzugt 0,002 bis 0,0035 B,
Rest Fe und unvermeidbare Verunreinigungen,

mit einer Beschichtung enthaltend (alle Angaben in Gew.-%):

3 bis 15 Si,
1 bis 3,5 Fe,
bis zu 0,5 Alkali- und/oder Erdalkalimetalle,
Rest Al und unvermeidbare Verunreinigungen.

Unvermeidbare Verunreinigungen im Substrat sind erfindungsgemäß beispielsweise Cu, Mo, V, Ni und/oder Sn.
Erfindungsgemäß kann in Schritt (A) des erfindungsgemäßen Verfahrens jedes dem Fachmann als geeignet erscheinende Stahlflachprodukt mit der entsprechenden Analyse und einer entsprechenden Beschichtung verwendet werden. Bevorzugt handelt es sich bei dem eingesetzten Stahlflachprodukt um ein Band, insbesondere ein Warmband oder ein Kaltband, um eine Blech, d. h. ein Stück eines Warmbandes oder eines Kaltbandes, oder um eine Platine aus einem Warmband oder eine Platine aus einem Kaltband. Die vorliegende Erfindung betrifft bevorzugt das erfindungsgemäße Verfahren, wobei das Stahlflachprodukt eine Platine aus einem Warmband oder eine Platine aus einem Kaltband ist.
Verfahren zur Herstellung eines Warmbandes bzw. eines Kaltbandes sind dem Fachmann an sich bekannt und beispielsweise beschrieben in (Hoffmann, Hartmut; Neugebauer, Reimund; Spur, Günter (2012): Handbuch Umformen. München: Carl Hanser Verlag GmbH & Co. KG. S. 109-165 und S. 196-207).
Das erfindungsgemäß beschaffene Stahlflachprodukt wird mit einer Beschichtung versehen, wobei die Beschichtung bevorzugt 3 bis 15, besonders bevorzugt 7 bis 12, ganz besonders bevorzugt 9 bis 10 Si, 1 bis 3,5, bevorzugt 2 bis 3,5 Fe, bis zu 0,5 Alkali- und/oder Erdalkalimetalle, beispielsweise Magnesium, Kalzium und/oder Lithium, Rest Al und unvermeidbare Verunreinigungen enthält (alle Angaben in Gew.-%).

Verfahren zur Herstellung eines entsprechenden beschichteten Stahlflachproduktes sind dem Fachmann an sich bekannt, beispielsweise kann die Beschichtung durch eine Feuerbeschichtung, eine elektrolytische Beschichtung oder mittels eines Stückbeschichtungsprozesses erfolgen. Die vorliegende Erfindung betrifft daher bevorzugt das erfindungsgemäße Verfahren, wobei die Beschichtung durch eine Feuerbeschichtung, eine elektrolytische Beschichtung oder mittels eines Stückbeschichtungsprozesses erfolgt.

Vorzugsweise erfolgt das Aufbringen der Aluminium-Silizium-Eisen-Legierung mittels eines kontinuierlichen Feuerbeschichtungsprozesses.

Vorzugsweise liegt bei der Beschichtung die Temperatur des Aluminium-Schmelzbades zwischen 660 °C und 720 °C.

Silizium in der Beschichtung wirkt als Diffusionsblocker und dient der Beruhigung des Schmelzenbades beim Aufbringen des aus der Aluminium-Legierung gebildeten Überzuges mittels Feuerbeschichtung.

Die Dicke der Beschichtung liegt erfindungsgemäß bevorzugt bei 5 bis 60 $\mu$m, vorzugsweise 10 bis 40 $\mu$m. Daraus ergibt sich ein erfindungsgemäßes Auflagengewicht der beidseitigen Beschichtung von 20 bis 240 g/m$^2$, bevorzugt 40 bis 200 g/m$^2$, besonders bevorzugt 50 bis 180 g/m$^2$, beispielsweise 60, 80 oder 150 g/m$^2$. Die vorliegende Erfindung betrifft daher bevorzugt das erfindungsgemäße Verfahren, wobei Auflagegewicht der beidseitigen Beschichtung 20 bis 240 g/m$^2$ beträgt.

Erfindungsgemäß kann die Beschichtung auf einer Seite des Stahlflachproduktes oder auf beiden Seiten des Stahlflachproduktes vorliegen. Die vorliegende Erfindung betrifft daher bevorzugt das erfindungsgemäße Verfahren, wobei die Beschichtung auf einer Seite des Stahlflachproduktes oder auf beiden Seiten des Stahlflachproduktes vorliegt.

Erfindungsgemäß bevorzugt wird das beschichtete Stahlflachprodukt aus Schritt (A) direkt in den erfindungsgemäßen Verfahrensschritt (B) überführt. Es ist allerdings auch möglich, dass zwischen den Schritten (A) und (B) weitere Schritte durchgeführt werden, beispielsweise Abtrennen von Bereichen, insbesondere Blechen oder Platinen, des Stahlflachproduktes, beispielsweise durch Scherschneiden oder Laserschneiden, Einbringen von Löchern durch Laserbearbeitung oder Stanzen, vorangehende Wärmebehandlungen zur Veränderung der Eigenschaften der Beschichtung oder des Substrates, und/oder Einbringen einer Vorumformung.

Schritt (B) des erfindungsgemäßen Verfahrens umfasst das Behandeln des Stahlflachproduktes bei einer Ofentemperatur T1 (in K) für eine Dauer t1 (in h), so dass p1 gemäß der Gleichung der allgemeinen Formel (2) einen Wert von 0 bis 45 aufweist:

$$p_1 = \frac{T_1}{10K} \cdot \left( 7{,}562 + \log\left(\frac{t_1}{h}\right) \right) - 746{,}9 \qquad (2).$$

Es hat sich erfindungsgemäß herausgestellt, dass besonders vorteilhafte Produkte, insbesondere bezüglich des Biegewinkels gemäß VDA 238-100, erhalten werden, wenn in Schritt (B) die Wärmebehandlung so durchgeführt wird, dass der in Gleichung (2) genannte Parameter p1 einen Wert von 0 bis 91, bevorzugt 0 bis 66, erfindungsgemäß 10 bis 45, aufweist.

In der Gleichung der allgemeinen Formel (2) bedeutet T1 die Ofentemperatur in Kelvin, d.h. die Temperatur, die im Ofen, in dem Schritt (B) des erfindungsgemäßen Verfahrens durchgeführt wird, vorliegt. Erfindungsgemäß können alle dem Fachmann bekannten Öfen eingesetzt werden, beispielsweise Rollenherdöfen, Kammeröfen, Mehrlagenkammeröfen, Hubbalkenöfen. T1 liegt erfindungsgemäß bei 1070 bis 1350 K, bevorzugt 1100 bis 1250 K, wobei gleichzeitig erfüllt sein muss, dass p1 nach Gleichung (2) einen Wert von 0 bis 45 aufweist. Die vorliegende Erfindung betrifft daher das erfindungsgemäße Verfahren, wobei T1 bei 1070 bis 1350 K, bevorzugt 1100 bis 1250 K, beträgt.

In der Gleichung der allgemeinen Formel (2) bedeutet $t_1$ die Dauer, für die das Stahlflachprodukt der entsprechenden Temperatur $T_1$ ausgesetzt ist. Bevorzugt ist dies der Zeitraum vom Einfahren/Einlegen der Probe in den Ofen bis zum Ausfahren/zur Entnahme der Probe aus dem Ofen. Erfindungsgemäß wird $t_1$ in Stunden (h) angegeben. $t_1$ liegt erfindungsgemäß bei 0,017 bis 0,50 h, bevorzugt 0,026 bis 0,50 h, wobei gleichzeitig erfüllt sein muss, dass $p_1$ nach Gleichung (2) einen Wert von 0 bis 45 aufweist. Die vorliegende Erfindung betrifft daher das erfindungsgemäße Verfahren, wobei $t_1$ 0,017 bis 0,5 h, bevorzugt 0,026 bis 0,50 h, beträgt.

Bei Werten von $p_1$ unterhalb von 0 wird keine ausreichende Interdiffusionsschicht ausgebildet. Dadurch können die weiteren Verarbeitungseigenschaften nicht sichergestellt werden, wie z.B. ausreichende Umformeigenschaften sind nicht gegeben.

Während Schritt (B) des erfindungsgemäßen Verfahrens, insbesondere der Zeitraum vom Einfahren/Einlegen der Probe in den Ofen bis zum Ausfahren/zur Entnahme der Probe aus dem Ofen, kommt es zu Diffusionsprozessen zwischen dem Stahlsubstrat und der Beschichtung. Dabei bilden sich verschiedene intermetallische Phasen hauptsächlich zwischen Aluminium und Eisen unter verschiedenen Beteiligungen der anderen Schicht- und Substratelemente aus. Abhängig von der Ofenverweildauer und der Temperatur bildet sich am Übergang zwischen Substrat und Beschichtung eine Zone aus, in der sich nach fachgerechtem Presshärten kein martensitisches Gefüge einstellt, welches aber auch nicht der Beschichtung zuzuordnen ist. Dieser Bereich wird erfindungsgemäß als Interdiffusionsschicht (IDS) bezeichnet und erstreckt sich bevorzugt ausgehend von der Mitte des Stahlflachproduktes ab dem Bereich, ab dem kein martensitisches Gefüge mehr vorliegt, bis zu dem Bereich ab dem der Eisengehalt fortlaufend niedriger als oder gleich 85 Gew.-% ist und gleichzeitig der Aluminiumgehalt fortlaufend größer als oder gleich 10 Gew.-% ist. Weiter bevorzugt beträgt in der Interdiffusionsschicht die messbare Nanohärte, ermittelt beispielsweise mit einem dem Fachmann bekannten Nanoindenter (Indenterkraft 4000 $\mu$N; Berkovich-Indenter) 4 bis 10 GPa.

Schritt (C) des erfindungsgemäßen Verfahrens umfasst das Umformen des aufgeheizten Stahlflachproduktes aus Schritt (B) in einem Formwerkzeug unter gleichzeitigem Abkühlen, um das Stahlbauteil zu erhalten.

Im Allgemeinen können in Schritt (C) des erfindungsgemäßen Verfahrens alle dem Fachmann bekannten Verfahren zum Warmumformen eingesetzt werden, beispielsweise beschrieben in Warmumformung im Automobilbau-Verfahren, Werkstoffe, Oberflächen, Landsberg/Lech: Verl. Moderne Industrie, 2012, Die Bibliothek der Technik.

In Schritt (C) des erfindungsgemäßen Verfahrens wird aus dem Stahlflachprodukt aus Schritt (B) durch Umformen das gewünschte Stahlbauteil erhalten. Damit sich in dem Stahlbauteil das gewünschte Härtegefüge, d.h. mindestens 80% Martensit, Rest Bainit und Restaustenit, ausbildet, erfolgt das Umformen unter gleichzeitigem Abkühlen. Das Abkühlen in Schritt (C) des erfindungsgemäßen Verfahrens erfolgt dabei bevorzugt mit einer Rate von 27 bis 1000 K/s, bevorzugt 50 bis 500 K/s. Die vorliegende Erfindung betrifft daher bevorzugt das erfindungsgemäße Verfahren, wobei das Abkühlen in Schritt (C) bei einer Abkühlrate von 27 bis 500 K/s erfolgt.

Durch das erfindungsgemäße Verfahren wird ein Stahlbauteil erhalten, umfassend ein Substrat und eine Beschichtung, wobei der Biegewinkel $\alpha$ des Stahlbauteils und die Dicke der Interdiffusionsschicht $t_{IDS}$ an der Grenzschicht zwischen Substrat und Beschichtung gemäß der allgemeinen Formel (1)

$$\alpha = \left(-0{,}52968 \cdot \frac{t_{IDS}}{\mu m} + 62{,}620\right)° \qquad (1)$$

miteinander verknüpft sind. In der allgemeinen Formel (1) bedeutet $\alpha$ den Biegewinkel gemäß VDA 238-100, den das erfindungsgemäß hergestellte Stahlbauteil aufweist.

Der in Gleichung (1) angegebene Biegewinkel $\alpha$ wird erfindungsgemäß mit der Probenlage Längs, d.h. Biegeachse Quer zur Walzrichtung, bestimmt. Da das Versagen beim Biegeversuch gemäß VDA 238-100 üblicherweise von der äußeren Faser der Probe ausgeht, muss für Gleichung (1) bevorzugt die Interdiffusionsschichtdicke zugrunde gelegt werden, die auf der Seite der Probe vorliegt, die beim Biegen die äußere Faser darstellt, d. h. insbesondere die Seite, auf der der Winkel der beiden zu biegenden Schenkel der Probe ausgehend von 180° zunimmt. Wird der in Gleichung (1) angegebene Biegewinkel $\alpha$ erfindungsgemäß mit der Probenlage Quer, d.h. Biegeachse Längs zur Walzrichtung bestimmt, so sind aufgrund der Werkstoffanisotropie die ermittelten Werte ca. 6,5% niedriger. Ebenfalls können sich für andere Probenlagen (z.B. Diagonal) ebenfalls etwas abweichende Biegewinkel zeigen, wobei die Abweichungen bevorzugt zwischen denen aus Längs- und Querlage, d. h. zwischen 0 und 6,5% liegen. Die Werte spiegeln in ihrer gesamten Tendenz den Zusammenhang gemäß Gleichung (1) wieder. Daher gilt die Gleichung (1) erfindungsgemäß bevorzugt für Biegewinkel $\alpha$, die mit der Probenlage Längs, d.h. Biegeachse Quer zur Walzrichtung, bestimmt worden sind.

Die Crasheignung eines Stahlbauteils hängt wesentlich von dem im "Plättchen-Biegeversuch für metallische Werkstoffe" (VDA238-100) gemessenen Biegewinkel bei Kraftmaximum ab (siehe dazu Till Laumann; Qualitative und quantitative Bewertung der Crashtauglichkeit von höchstfesten Stählen; Meisenbach Verlag Bamberg, 2010 (ISBN 978-3-87525-299-6)). Hohe Biegewinkel stehen dabei für eine gute Crasheignung.

In der allgemeinen Gleichung (2) bedeutet $t_{IDS}$ die Interdiffusionsschichtdicke und wird in Mikrometer ($\mu$m) angegeben. Dabei ist die Interdiffusionsschicht definiert als der Bereich, der sich, ausgehend von der Mitte des Stahlflachproduktes, ab dem Bereich, ab dem kein martensitisches Gefüge mehr vorliegt, bis zu dem Bereich, ab dem der Eisengehalt fortlaufend niedriger als oder gleich 85 Gew.-% ist und gleichzeitig der Aluminiumgehalt fortlaufend größer als oder gleich 10 Gew.-%, erstreckt.

Bevorzugt beträgt in dem erfindungsgemäß hergestellten Stahlbauteil die Interdiffusionsdicke $t_{IDS}$ 2,0 bis 21,0 $\mu$m und der Biegewinkel $\alpha$ beträgt 49,5 bis 70°, wobei die Werte erfindungsgemäß so miteinander verknüpft sein müssen, dass die Gleichung der allgemeinen Formel (1) gilt.

Die vorliegende Erfindung betrifft auch ein Stahlbauteil umfassend ein Substrat enthaltend (alle Angaben in Gew.-%):

0,15 bis 0,50 bevorzugt 0,20 bis 0,30, besonders bevorzugt 0,21 bis 0,25 C,
0,50 bis 3,0, bevorzugt 0,80 bis 2,00, besonders bevorzugt 1,00 bis 1,50 Mn,
0,10 bis 0,50, bevorzugt 0,15 bis 0,40, besonders bevorzugt 0,20 bis 0,30 Si,
0,01 bis 1,00, bevorzugt 0,10 bis 0,5, besonders bevorzugt 0,10 bis 0,40 Cr,

0,01 bis 0,05, besonders bevorzugt 0,02 bis 0,05 Al,
bis zu 0,20, bevorzugt 0,01 bis 0,10, besonders bevorzugt 0,01 bis 0,04 Ti,
bis zu 0,10, bevorzugt 0,00 bis 0,05, besonders bevorzugt 0,00 bis 0,02 P,
bis zu 0,1, bevorzugt 0,001 bis 0,1 Nb,
bis zu 0,01 N,
bis zu 0,05, bevorzugt 0,00 bis 0,005, besonders bevorzugt 0,00 bis 0,003 S und
bis zu 0,1, bevorzugt 0,001 bis 0,05, besonders bevorzugt 0,002 bis 0,0035 B,
Rest Fe und unvermeidbare Verunreinigungen,

und eine Beschichtung enthaltend (alle Angaben in Gew.-%)

3 bis 15 Si,
1 bis 3,5 Fe,
bis zu 0,5 Alkali- und/oder Erdalkalimetalle,
Rest Al und unvermeidbare Verunreinigungen,

wobei der Biegewinkel $\alpha$ des Stahlbauteils und die Dicke der Interdiffusionsschicht $t_{IDS}$ an der Grenzschicht zwischen Substrat und Beschichtung gemäß der allgemeinen Formel (1)

$$\alpha = \left(-0,52968 \cdot \frac{t_{IDS}}{\mu m} + 62,620\right)° \qquad (1)$$

miteinander verknüpft sind. Bevorzugt wird dieses erfindungsgemäße Stahlbauteil durch das erfindungsgemäße Verfahren erhalten.

Die vorliegende Erfindung betrifft das erfindungsgemäße Stahlbauteil, wobei es durch Umformen eines entsprechenden Stahlflachproduktes erhalten wird, wobei das Stahlflachprodukt vor dem Umformen bei einer Ofentemperatur $T_1$ (in K) für eine Dauer $t_1$ (in h), behandelt worden ist, so dass $p_1$ gemäß der folgenden Gleichung der Formel (2) einen Wert von 0 bis 91, bevorzugt 0 bis 66, erfindungsgemäß 10 bis 45, aufweist:

$$p_1 = \frac{T_1}{10\text{K}} \cdot \left(7,562 + \log\left(\frac{t_1}{\text{h}}\right)\right) - 746,9 \qquad (2).$$

Weiter bevorzugt betrifft die vorliegende Erfindung das erfindungsgemäße Stahlbauteil, wobei das Auflagegewicht der beidseitigen Beschichtung 20 bis 240 g/m$^2$, bevorzugt 40 bis 200 g/m$^2$, beträgt.
Bezüglich der einzelnen Merkmale des erfindungsgemäßen Stahlbauteils und der bevorzugten Ausführungsformen gilt das bezüglich des erfindungsgemäßen Verfahrens Gesagte entsprechend.
Ein Aspekt betrifft ein Stahlbauteil enthaltend (alle Angaben in Gew.-%):

0,15 bis 0,50 bevorzugt 0,20 bis 0,30, besonders bevorzugt 0,21 bis 0,25 C,
0,50 bis 3,0, bevorzugt 0,80 bis 2,00, besonders bevorzugt 1,00 bis 1,50 Mn,
0,10 bis 0,50, bevorzugt 0,15 bis 0,40, besonders bevorzugt 0,20 bis 0,30 Si,
0,01 bis 1,00, bevorzugt 0,10 bis 0,5, besonders bevorzugt 0,10 bis 0,40 Cr,
bis zu 0,20, bevorzugt 0,01 bis 0,10, besonders bevorzugt 0,01 bis 0,04 Ti,
bis zu 0,10, bevorzugt 0,01 bis 0,05, besonders bevorzugt 0,02 bis 0,05 Al,
bis zu 0,10, bevorzugt 0,00 bis 0,05, besonders bevorzugt 0,00 bis 0,02 P,
bis zu 0,1, bevorzugt 0,001 bis 0,1 Nb,
bis zu 0,01 N,
bis zu 0,05, bevorzugt 0,00 bis 0,005, besonders bevorzugt 0,00 bis 0,003 S und
bis zu 0,1, bevorzugt 0,001 bis 0,05, besonders bevorzugt 0,002 bis 0,0035 B,
Rest Fe und unvermeidbare Verunreinigungen, als Substrat

mit einer Beschichtung enthaltend (alle Angaben in Gew.-%)

3 bis 15 Si,
1 bis 3,5 Fe,
bis zu 0,5 Alkali- und/oder Erdalkalimetalle,
Rest Al und unvermeidbare Verunreinigungen,

wobei es an der Grenzfläche zwischen dem Substrat und der Beschichtung eine Interdiffusionsschicht mit einer Dicke von 1 bis 30 $\mu$m aufweist.

Die vorliegende Erfindung betrifft auch die Verwendung eines erfindungsgemäßen beschichteten Stahlbauteils im Automobilsektor, insbesondere als Stoßstangenträger/-verstärkung, Türverstärkung, B-Säulen-Verstärkung, A-Säulen-Verstärkung, Dachrahmen oder Schweller.

Bezüglich der einzelnen Merkmale der erfindungsgemäßen Verwendung und der bevorzugten Ausführungsformen gilt das bezüglich des erfindungsgemäßen Verfahrens Gesagte entsprechend.

Figuren

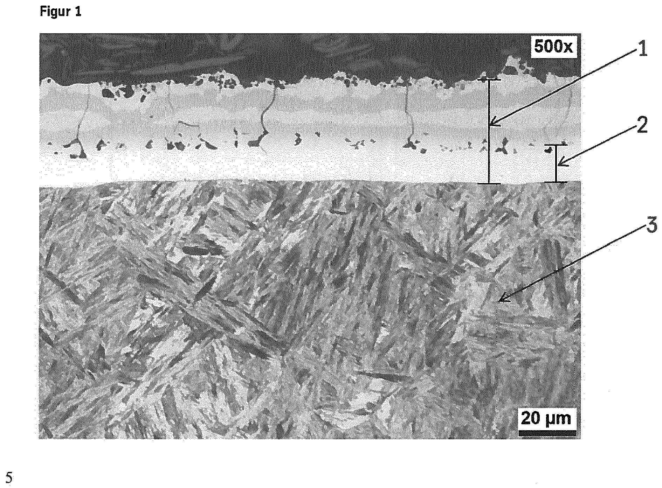

Figur 1 zeigt eine lichtmikroskopische Aufnahme (Querschliff/Schliffbild) der Beschichtung eines erfindungsgemäß hergestellten beschichteten Stahlbauteils. Darin bedeuten:

1 Gesamte Beschichtung
2 Interdiffusionsschicht
3 Substrat (22MnB5)

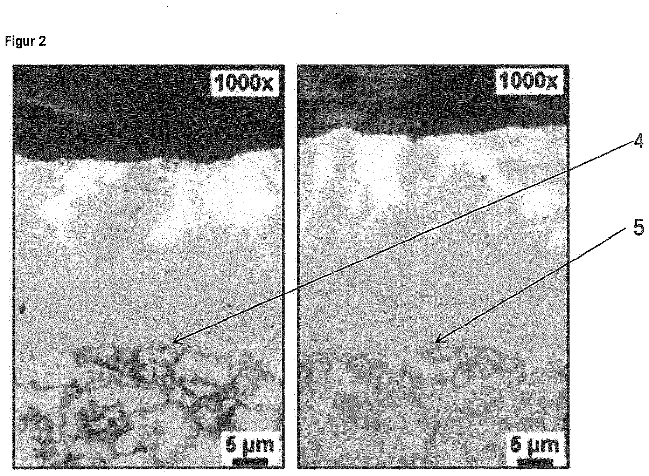

Figure 2 zeigt eine lichtmikroskopische Aufnahme (Querschliff/Schliffbild) der Beschichtung eines **nicht** erfindungsgemäß hergestellten beschichteten Stahlbauteils. Darin bedeuten:

4 nicht ausreichende Interdiffusionsschichtdicke nach einer Ofenverweildauer von 0,0389 Stunden bei 1193 K ($p_1$=-13)
5 nicht ausreichende Interdiffusionsschichtdicke nach einer Ofenliegedauer von 0,0444 Stunden bei 1193 K ($p_1$=-6,1)

**Beispiele**

Die nachfolgenden Ausführungsbeispiele dienen der näheren Erläuterung der Erfindung.

Es werden Stahlflachprodukte (Kaltband) der in Tabelle 1 genannten Analysen A, B, C und D in Form von Platinen eingesetzt. Dabei wurde das Kaltband beschichtet und die Platinen herausgetrennt. Bei der Beschichtung der exemplarisch eingesetzten Stahlflachprodukte handelt es sich um eine so genannte AlSi-Beschichtung die unter anderem durch Feuerbeschichten eingestellt werden kann, die aus 9 bis 10 Gew.-% Si, 2 bis 3,5 Gew.-% Eisen, Rest Aluminium besteht. Die so beschaffenen und beschichteten Stahlflachprodukte werden auf eine Temperatur $T_1$ (siehe Tabelle) für eine Dauer $t_1$ (siehe Tabelle) erwärmt, anschließend in ein Pressformwerkzeug eingelegt, dort warm zu dem Stahlbauteil geformt und dabei so schnell wie möglich durch den Kontakt mit einem üblichen Warmumformwerkzeug innerhalb von ca. 15 Sekunden abgekühlt, dass ein Härtegefüge (mit einem Martensitanteil von mind. 80%, Rest: Bainit (0-20%), Restaustenit (0-5%), Ferrit (0-5%) im Stahlsubstrat des Stahlflachprodukts entsteht. Das Presshärten erfolgt bei folgenden Prozessparametern: Taupunkt < 278,15 K, Transferzeit Ofen zu Werkzeug 6 s, Schließdauer des Werkzeugs 15 s.

Für die Versuche werden Ofentemperatur $T_1$, Ofenverweildauer $t_1$, Blechdicke und Auflagegewicht variiert und damit Proben für den Biegeversuch hergestellt. Die Messung erfolgt an jeweils 5 Proben mit gleichen Verarbeitungseigenschaften im Biegeversuch nach VDA238-100 (Probenlage "Längs", d.h. Biegeachse quer zur Walzrichtung). Aus den 5 Proben wird das arithmetische Mittel gebildet. Die Legierungsschichtdicke wird im Querschliff nach Ätzen mit 3% $HNO_3$ gemessen. Das Ausmessen erfolgt durch quantitative Bildanalyse nach Identifikation der Beschichtung durch Nanoindenterhärtemessung oder GDOS (Glimmentladungsspektroskopie).

**Tabelle 1: Zusammensetzungen der eingesetzten Schmelzen, aller Angaben in Gew.-%, Rest Fe**

| Legierungselement | Schmelze (alle Angaben in Gew.-%) | | | |
|---|---|---|---|---|
| | A | B | C | D |
| C | 0,212 | 0,217 | 0,23 | 0,217 |
| Si | 0,263 | 0,248 | 0,218 | 0,24 |
| Mn | 1,15 | 1,16 | 1,22 | 1,12 |
| P | 0,016 | 0,014 | 0,016 | 0,01 |
| S | 0,0011 | 0,0022 | 0,0005 | 0,001 |
| Al gesamt | 0,029 | 0,038 | 0,028 | 0,035 |

(fortgesetzt)

| Legierungselement | Schmelze (alle Angaben in Gew.-%) | | | |
|---|---|---|---|---|
| | A | B | C | D |
| Cr | 0,18 | 0,203 | 0,102 | 0,21 |
| Nb | 0,001 | 0,001 | 0,001 | 0,001 |
| Mo | 0,004 | 0,004 | 0,0015 | 0,02 |
| Ti | 0,02 | 0,023 | 0,026 | 0,028 |
| B | 0,0028 | 0,0026 | 0,0023 | 0,0024 |

In Tabelle 2 werden die Prozessparameter und die erhaltenen Biegewinkel angegeben.

**Tabelle 2: Prozessparameter und erhaltene Biegewinkel**

| Nr. | Schmelze Nr. | $T_1$ [K] | $t_1$ [h] | Blechdicke [mm] | Auflagegewicht beidseitig [g/m²] | $p_1$ | $t_{IDS}$ [μm] | $\alpha$ [°] |
|---|---|---|---|---|---|---|---|---|
| 1 | C | 1193 | 0,0833 | 1,0 | 80 | 26,5 | 8 | 60,2 |
| 2 | A | 1193 | 0,0500 | 1,5 | 80 | 0,0 | 3 | 62,2 |
| 3 | B | 1153 | 0,0833 | 1,5 | 150 | 0,5 | 5 | 59,1 |
| 4 | B | 1193 | 0,0833 | 1,5 | 150 | 26,5 | 8 | 58,3 |
| 5 | B | 1153 | 0,1667 | 1,5 | 150 | 35,3 | 10 | 58,7 |
| 6 | A | 1153 | 0,1667 | 1,5 | 80 | 35,3 | 9 | 58,7 |
| V7 | B | 1233 | 0,5000 | 1,5 | 150 | 148,4 | 29 | 46,4 |
| 8 | B | 1233 | 0,1667 | 1,5 | 150 | 89,6 | 20 | 50,3 |
| 9 | A | 1153 | 0,2500 | 1,5 | 60 | 55,6 | 12 | 56,6 |
| 10 | C | 1193 | 0,0667 | 1,0 | 80 | 15,0 | 6 | 60,7 |
| 11 | B | 1193 | 0,1667 | 1,5 | 150 | 62,4 | 14 | 55,1 |
| 12 | A | 1153 | 0,0833 | 1,5 | 80 | 0,5 | 5 | 60,7 |
| 13 | A | 1193 | 0,0833 | 1,5 | 60 | 26,5 | 8 | 57,3 |
| 14 | A | 1193 | 0,2500 | 1,5 | 60 | 83,4 | 16 | 52,2 |
| 15 | A | 1193 | 0,0833 | 1,5 | 80 | 26,5 | 7 | 57,0 |
| 16 | B | 1153 | 0,2500 | 1,5 | 150 | 55,6 | 12 | 55,1 |
| 17 | A | 1233 | 0,0833 | 1,5 | 60 | 52,4 | 14 | 55,6 |
| 18 | A | 1233 | 0,1667 | 1,5 | 60 | 89,6 | 17 | 50,9 |
| V19 | A | 1233 | 0,5000 | 1,5 | 60 | 148,4 | 31 | 48,9 |
| 20 | B | 1233 | 0,0833 | 1,5 | 150 | 52,4 | 12 | 55,5 |
| 21 | A | 1153 | 0,5000 | 1,5 | 60 | 90,3 | 18 | 52,7 |
| 22 | D | 1153 | 0,0833 | 2 | 80 | 0,5 | 5 | 58,5 |
| 23 | D | 1193 | 0,1000 | 2 | 80 | 35,9 | 6 | 56,0 |

V    Vergleichsversuch
$T_1$    Ofentemperatur
$t_1$    Ofenverweildauer
$p_1$    skalarer Produktionsparameter
$t_{IDS}$    Interdiffusionsschichtdicke
$\alpha$    Biegewinkel nach VDA238-100 (Probenlage längs, d.h. Biegeachse Quer zur Walzrichtung)

**Gewerbliche Anwendbarkeit**

Das erfindungsgemäß hergestellte Stahlbauteil weist ein verbessertes Crashverhalten aus und kann daher vorteilhaft in Automobilsektor verwendet werden.

**Patentansprüche**

1. Verfahren zur Herstellung eines Stahlbauteils, umfassend ein Substrat und eine Beschichtung, wobei der Biegewinkel $\alpha$ des Stahlbauteils und die Dicke der Interdiffusionsschicht $t_{IDS}$ an der Grenzschicht zwischen Substrat und Beschichtung gemäß der allgemeinen Formel (1) :

$$\alpha = \left(-0{,}52968 \cdot \frac{t_{IDS}}{\mu m} + 62{,}620\right)° \qquad (1)$$

   miteinander verknüpft sind, umfassend wenigstens die Schritte:

   (A) Bereitstellen eines Stahlflachproduktes enthaltend (alle Angaben in Gew.-%):

   0,15 bis 0,50 C,
   0,50 bis 3,0 Mn,
   0,10 bis 0,50 Si,
   0,01 bis 1,00 Cr,
   0,01 bis 0,05 Al,
   bis zu 0,20 Ti,
   bis zu 0,10 P,
   bis zu 0,1 Nb,
   bis zu 0,01 N,
   bis zu 0,05 S und
   bis zu 0,1 B,
   Rest Fe und unvermeidbare Verunreinigungen,
   mit einer Beschichtung enthaltend (alle Angaben in Gew.-%):

   3 bis 15 Si,
   1 bis 3,5 Fe,
   bis zu 0,5 Alkali- und/oder Erdalkalimetalle,
   Rest Al und unvermeidbare Verunreinigungen,

   (B) Behandeln des Stahlflachproduktes bei einer Ofentemperatur $T_1$ (in K) für eine Dauer $t_1$ (in h), so dass $p_1$ gemäß der Gleichung der allgemeinen Formel (2) einen Wert von 0 bis 45 aufweist:

$$p_1 = \frac{T_1}{10K} \cdot \left(7{,}562 + \log\left(\frac{t_1}{h}\right)\right) - 746{,}9 \qquad (2),$$

   wobei $T_1$ 1070 bis 1350 K beträgt und $t_1$ 0,017 bis 0,5 h beträgt, und
   (C) Umformen des aufgeheizten Stahlflachproduktes aus Schritt (B) in einem Formwerkzeug unter gleichzeitigem Abkühlen, um das Stahlbauteil zu erhalten.

2. Verfahren nach Anspruch 1, **dadurch gekennzeichnet, dass** das Stahlflachprodukt eine Platine aus einem Warmband oder eine Platine aus einem Kaltband ist.

3. Verfahren nach Anspruch 1 oder 2, **dadurch gekennzeichnet, dass** die Beschichtung durch eine Feuerbeschichtung, eine elektrolytische Beschichtung oder mittels eines Stückbeschichtungsprozesses erfolgt.

4. Verfahren nach einem der Ansprüche 1 bis 3, **dadurch gekennzeichnet, dass** das Auflagegewicht der beidseitigen Beschichtung 20 bis 240 g/m$^2$ beträgt.

**5.** Verfahren nach einem der Ansprüche 1 bis 4, **dadurch gekennzeichnet, dass** das Abkühlen in Schritt (C) bei einer Abkühlrate von 27 bis 500 K/s erfolgt.

**6.** Verfahren nach einem der Ansprüche 1 bis 5, **dadurch gekennzeichnet, dass** die Beschichtung auf einer Seite des Stahlflachproduktes oder auf beiden Seiten des Stahlflachproduktes vorliegt.

**7.** Stahlbauteil umfassend ein Substrat enthaltend (alle Angaben in Gew.-%):

0,15 bis 0,50 C,
0,50 bis 3,0 Mn,
0,10 bis 0,50 Si,
0,01 bis 1,00 Cr,
bis zu 0,20 Ti,
0,01 bis 0,05 Al,
bis zu 0,10 P,
bis zu 0,1 Nb,
bis zu 0,01 N,
bis zu 0,05 S und
bis zu 0,1 B,
Rest Fe und unvermeidbare Verunreinigungen,

und eine Beschichtung enthaltend (alle Angaben in Gew.-%) :

3 bis 15 Si,
1 bis 3,5 Fe,
bis zu 0,5 Alkali- und/oder Erdalkalimetalle,
Rest Al und unvermeidbare Verunreinigungen,
**dadurch gekennzeichnet, dass** der Biegewinkel $\alpha$ des Stahlbauteils (in °) und die Dicke der Interdiffusionsschicht $t_{IDS}$ an der Grenzschicht zwischen Substrat und Beschichtung (in $\mu$m) gemäß der allgemeinen Formel (1)

$$\alpha = \left(-0{,}52968 \cdot \frac{t_{IDS}}{\mu m} + 62{,}620\right)° \qquad (1)$$

miteinander verknüpft sind,
wobei das Stahlbauteil durch Umformen eines entsprechenden Stahlflachproduktes erhalten wird, wobei das Stahlflachprodukt vor dem Umformen bei einer Ofentemperatur $T_1$ (in K) für eine Dauer $t_1$ (in h), behandelt worden ist, so dass $p_1$ gemäß der folgenden Gleichung der Formel (2) einen Wert von 0 bis 45 aufweist:

$$p_1 = \frac{T_1}{10\mathrm{K}} \cdot \left(7{,}562 + \log\left(\frac{t_1}{h}\right)\right) - 746{,}9 \qquad (2) ,$$

wobei $T_1$ 1070 bis 1350 K beträgt und $t_1$ 0,017 bis 0,5 h beträgt.

**8.** Stahlbauteil nach Anspruch 7, **dadurch gekennzeichnet, dass** das Auflagegewicht der beidseitigen Beschichtung 20 bis 240 g/m² beträgt.

**9.** Verwendung eines beschichteten Stahlbauteils nach einem der Ansprüche 7 bis 8, im Automobilsektor, insbesondere als Stoßstangenträger/-verstärkung, Türverstärkung, B-Säulen-Verstärkung, A-Säulen-verstärkung, Dachrahmen oder Schweller.

**Claims**

**1.** A method for producing a steel component comprising a substrate and a coating, wherein the bending angle $\alpha$ of the steel component and the thickness of the interdiffusion layer $t_{IDS}$ at the boundary layer between the substrate and the coating are interlinked in accordance with the general formula (1):

$$\alpha = \left(-0.52968 \cdot \frac{t_{IDS}}{\mu m} + 62.620\right)^{\circ} \qquad (1)$$

comprising at least the steps:

(A) provision of a flat steel product containing (all data in % by weight):

0.15 to 0.50 C,
0.50 to 3.0 Mn,
0.10 to 0.50 Si,
0.01 to 1.00 Cr,
0.01 to 0.05 Al,
up to 0.20 Ti,
up to 0.10 P,
up to 0.1 Nb,
up to 0.01 N,
up to 0.05 S and
up to 0.1 B,
residual Fe and unavoidable impurities,

containing a coating (all figures in % by weight):

3 to 15 Si,
1 to 3.5 Fe,
up to 0.5 alkali and/or alkaline earth metals,
residual Al and unavoidable impurities,

(B) treating the flat steel product at a furnace temperature $T_1$ (in K) for a duration $t_1$ (in h) so that $P_1$ has a value from 0 to 45 in accordance with the equation of the general formula (2):

$$p_1 = \frac{T_1}{10K} \cdot \left(7.562 + \log\left(\frac{t_1}{h}\right)\right) - 746.9 \qquad (2),$$

wherein $T_1$ is 1070 to 1350 K and $t_1$ is 0.017 to 0.5 h, and
(C) forming the heated flat steel product from step (B) in a moulding tool with simultaneous cooling to obtain the steel component.

2. Method according to Claim 1, **characterized in that** the flat steel product is a plate made from a hot strip or a blank made from a cold strip.

3. Method according to Claim 1 or 2, **characterized in that** the coating is carried out by means of hot-dip coating, an electrolytic coating or by means of a piece coating process.

4. Method according to any one of the Claims 1 to 3, **characterized in that** the support weight of the double-sided coating is 20 to 240 $g/m^2$.

5. Method according to any one of the Claims 1 to 4, **characterized in that** the cooling takes place in step (C) at a cooling rate of 27 to 500 K/s.

6. Method according to any one of the Claims 1 to 5, **characterized in that** the coating is present on one side of the flat steel product or on both sides of the flat steel product.

7. Steel component comprising a substrate containing (all figures in % by weight):

0.15 to 0.50 C,
0.50 to 3.0 Mn,

0.10 to 0.50 Si,
0.01 to 1.00 Cr,
up to 0.20 Ti,
0.01 to 0.05 Al,
up to 0.10 P,
up to 0.1 Nb,
up to 0.01 N,
up to 0.05 S and
up to 0.1 B,

residual Fe and unavoidable impurities, and containing a coating (all figures in % by weight):

3 to 15 Si,
1 to 3.5 Fe,
up to 0.5 alkali and/or alkaline earth metals, residual Al and unavoidable impurities,
**characterized in that** the bending angle $\alpha$ of the steel component (in °) and bending angle is the thickness a of the interdiffusion layer $t_{IDS}$ at the boundary layer between the substrate and coating (in um) in accordance with the general formula (1):

$$\alpha = \left(-0.52968 \cdot \frac{t_{IDS}}{\mu m} + 62.620\right)° \qquad (1)$$

are interlinked,
wherein the steel component is obtained by forming a corresponding flat steel product, wherein the flat steel product has been treated before forming at a furnace temperature $T_1$ (in K) for a duration $t_1$ (in h), such that $P_1$ has a value from 0 to 45 in accordance with the following equation of the formula (2):

$$p_1 = \frac{T_1}{10K} \cdot \left(7.562 + \log\left(\frac{t_1}{h}\right)\right) - 746.9 \qquad (2),$$

wherein $T_1$ is 1070 to 1350 K and $t_1$ is 0.017 to 0.5 h.

8. The steel component according to Claim 7, **characterized in that** the contact weight of the double-sided coating is 20 to 240 g/m$^2$.

9. The use of a coated steel component according to any one of the Claims 7 to 8 in the automotive sector, in particular, as a bumper support/reinforcement, door reinforcement, B-pillar reinforcement, A-pillar reinforcement, roof frame or sill.

**Revendications**

1. Procédé, destiné à fabriquer une pièce en acier, comprenant un substrat et un revêtement, l'angle de flexion $\alpha$ de la pièce en acier et l'épaisseur de la couche d'interdiffusion $t_{IDS}$ sur la couche limite entre le substrat et le revêtement étant interdépendants, selon la formule générale (1) :

$$\alpha = \left(-0,52968 \cdot \frac{t_{IDS}}{\mu m} + 62,620\right)° \qquad (1)$$

comprenant au moins les étapes consistant à :

(A) mettre à disposition un produit plat en acier, contenant (toutes les mentions sont exprimées en % en poids):

de 0,15 à 0,50 de C,
de 0,50 à 3,0 de Mn,

de 0,10 à 0,50 de Si,
de 0,01 à 1,00 de Cr,
de 0,01 à 0,05 d'Al,
jusqu'à 0,20 de Ti,
jusqu'à 0,10 de P,
jusqu'à 0,1 de Nb,
jusqu'à 0,01 de N,
jusqu'à 0,05 de S et
jusqu'à 0,1 de B,
un reste de Fe et des impuretés inévitables,
pourvu d'un revêtement contenant (toutes les mentions sont exprimées en % en poids) :

de 3 à 15 de Si,
de 1 à 3,5 de Fe,
jusqu'à 0,5 de métaux alcalins et / ou
alcalinoterreux,
un reste d'Al et des impuretés inévitables,

(B) traiter le produit plat en acier à une température du four $T_1$ (exprimée en K) pour une durée $t_1$ (exprimée en h), de telle sorte que $p_1$ selon l'équation de la formule générale (2) présente une valeur de 0 à 45 :

$$p_1 = \frac{T_1}{10K} \cdot \left( 7{,}562 + \log\left(\frac{t_1}{h}\right) \right) - 746{,}9 \qquad (2)\,,$$

$T_1$ s'élevant à de 1070 à 1350 K et $t_1$ s'élevant à de 0,017 à 0,5 h, et
(C) façonner le produit plat en acier chauffé obtenu à l'étape (B) dans un outil de formage, en le refroidissant simultanément, de sorte à obtenir la pièce en acier.

2. Procédé selon la revendication 1, **caractérisé en ce que** le produit plat en acier est une carte en un feuillard laminé à chaud ou une carte en un feuillard laminé à froid.

3. Procédé selon la revendication 1 ou 2, **caractérisé en ce que** le revêtement s'effectue par revêtement à chaud, par un revêtement électrolytique ou au moyen d'un processus de revêtement de pièces.

4. Procédé selon l'une quelconque des revendications 1 à 3, **caractérisé en ce que** le poids de charge du revêtement bilatéral s'élève à de 20 à 240 g/m$^2$.

5. Procédé selon l'une quelconque des revendications 1 à 4, **caractérisé en ce que** le refroidissement dans l'étape (C) s'effectue à un taux de refroidissement de 27 à 500 K/s.

6. Procédé selon l'une quelconque des revendications 1 à 5, **caractérisé en ce que** le revêtement est présent sur une face du produit plat en acier ou sur les deux faces du produit plat en acier.

7. Pièce en acier comprenant un substrat contenant (toutes les mentions sont exprimées en % en poids):

de 0,15 à 0,50 de C
de 0,50 à 3,0 de Mn
de 0,10 à 0,50 de Si
de 0,01 à 1,00 de Cr
jusqu'à 0,20 de Ti,
de 0,01 à 0,05 d'Al,
jusqu'à 0,10 de P,
jusqu'à 0,1 de Nb,
jusqu'à 0,01 de N,
jusqu'à 0,05 de s et jusqu'à 0,1 de B,
un reste de Fe et des impuretés inévitables,
et un revêtement contenant (toutes les mentions sont exprimées en % en poids) :

de 3 à 15 de Si,
de 1 à 3,5 de Fe,
jusqu'à 0,5 de métaux alcalins et / ou
alcalinoterreux,
un reste d'Al et des impuretés inévitables,
**caractérisée en ce que** l'angle de flexion $\alpha$ de la pièce en acier (exprimé en °) et l'épaisseur de la couche d'interdiffusion $t_{IDS}$ sur la couche limite entre le substrat et le revêtement (exprimée en pm) sont interdépendants selon la formule générale (1)

$$\alpha = \left(-0{,}52968 \cdot \frac{t_{IDS}}{\mu m} + 62{,}620\right)° \qquad (1)$$

la pièce en acier étant obtenue par façonnage d'un produit plat en acier, avant le façonnage, le produit plat en acier ayant été traité à une température du four $T_1$ (exprimée en K) pour une durée $t_1$ (exprimée en h), de telle sorte que $p_1$ selon l'équation de la formule générale (2) présente une valeur de 0 à 45 :

$$p_1 = \frac{T_1}{10K} \cdot \left(7{,}562 + \log\left(\frac{t_1}{h}\right)\right) - 746{,}9 \qquad (2),$$

$T_1$ s'élevant à de 1070 à 1350 K et $t_1$ s'élevant à de 0,017 à 0,5 h.

8. Pièce en acier selon la revendication 7, **caractérisée en ce que** le poids de charge du revêtement bilatéral s'élève à de 20 à 240 g/m$^2$.

9. Utilisation d'une pièce en acier revêtue selon l'une quelconque des revendications 7 à 8 dans le secteur de l'industrie automobile, notamment en tant que support / renfort de pare-chocs, en tant que renfort de portière, en tant que renfort du montant B, en tant que renfort du montant A, en tant que cadre de toit ou de seuil.

**Figur 1**

**Figur 2**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2015036151 A1
- DE 69907816 T2
- WO 2008053273 A1

**In der Beschreibung aufgeführte Nicht-Patentliteratur**

- **HOFFMANN, HARTMUT ; NEUGEBAUER, REIMUND ; SPUR, GÜNTER.** Handbuch Umformen. Carl Hanser Verlag GmbH & Co, 2012, 109-165, 196-207
- **TILL LAUMANN.** Qualitative und quantitative Bewertung der Crashtauglichkeit von höchstfesten Stählen. Meisenbach Verlag, 2010